# EUROPÄISCHE PATENTSCHRIFT

(11) **EP 1 151 181 B1**
(45) Veröffentlichungstag und Bekanntmachung des Hinweises auf die Patenterteilung: **26.05.2004**
(21) Anmeldenummer: 00909081.2
(22) Anmeldetag: 18.01.2000
(51) Int. Cl.: F01D 17/14

(54) **ABGASTURBOLADER FÜR EINE BRENNKRAFTMASCHINE**
TURBOCHARGER FOR AN INTERNAL COMBUSTION ENGINE
TURBOCOMPRESSEUR POUR MOTEUR A COMBUSTION INTERNE

(30) Priorität: 11.02.1999 DE 19905637
(43) Veröffentlichungstag der Anmeldung: 07.11.2001
(73) Patentinhaber: DaimlerChrysler AG, 70567 Stuttgart (DE)
(72) Erfinder: FINGER, Helmut, D-70771 Leinfelden-Echterdingen (DE); FLEDERSBACHER, Peter, D-70619 Stuttgart (DE); SUMSER, Siegfried, D-70184 Stuttgart (DE); WIRBELEIT, Friedrich, D-73733 Esslingen (DE)
(86) Internationale Anmeldenummer: PCT/EP2000/000341
(87) Internationale Veröffentlichungsnummer: WO 2000/047873

(56) Entgegenhaltungen:
- DE-C- 4 303 520
- DE-C- 4 303 521
- US-A- 3 270 495
- US-A- 4 443 153
- US-A- 4 499 731
- US-A- 4 776 168
- US-A- 5 758 500

## Beschreibung

Die Erfindung betrifft einen Abgasturbolader für eine Brennkraftmaschine nach dem Oberbegriff des Anspruches 1.

Aus der Druckschrift DE 43 30 487 C1 ist ein Abgasturbolader mit radialer und mit halbaxialer Abgaszuströmung zum Turbinenrad bekannt, wobei eine variable Turbinengeometrie in Form von Leitgittern mit variablen Leitschaufeln zur veränderlichen Einstellung des Strömungseintrittsquerschnitts des Turbinenrads vorgesehen ist. Durch Veränderung des Strömungseintrittsquerschnitts können in Abhängigkeit des Betriebszustands der Brennkraftmaschine verschieden hohe Abgasgegendrücke im Abschnitt zwischen den Zylindern und dem Abgasturbolader realisiert werden, wodurch die Leistung der Turbine und die Leistung des Verdichters je nach Bedarf eingestellt werden können. In der befeuerten Antriebsbetriebsweise kann auf diese Weise der Wirkungsgrad des Abgasturboladers verbessert werden. Im Motorbremsbetrieb können hohe Motorbremsleistungen erzielt werden, indem die Turbinengeometrie in eine querschnittsreduzierende Sperrstellung überführt wird, so daß der Abgasgegendruck zwischen Zylinderauslaß und Turbine erhöht wird und der Kolben im Verdichtungs- und Ausschiebehub Kompressionsarbeit gegen den hohen Überdruck im Abgasstrang verrichten muß.

Ein vergleichbarer Abgasturbolader ist auch aus der US 5,758,500 bekannt.

Es sind weiterhin Abgasturbolader mit zweiflutigem Turbinengehäuse bekannt, so zum Beispiel aus der DE 195 40 060 A1, die zwei durch eine Trennwand unterteilte Strömungskanäle zur Zufuhr des Abgases zum Turbinenrad aufweisen. Die zweiflutige Ausbildung des Turbinengehäuses begünstigt die Stoßaufladung des Abgasturboladers, bei der die zündfolgenabhängige Druckwellenbildung einzelner Zylinder zur Steigerung der Laderleistung ausgenutzt wird.

Ein zweiflutiges Turbinengehäuse ist auch aus dem Dokument "Vorlesungsmanuskript des Fachgebietes Verbrennungsmotoren", Band II, Dezember 1985 der Technischen Hochschule Aachen, Seite 281 bekannt.

Die Druckschrift US 44 99 731 zeigt einen Abgasturbolader, in dessen Strömungskanal ein von einer Feder beaufschlagter, axial verstellbarer Ringkolben eingebracht ist, dessen Position sich dem Gleichgewichtszustand von Federkraft auf der einen Seite und Abgasgegendruck auf der anderen Seite entsprechend einstellt. Bei dem Kolben handelt es sich um ein passives Stellelement, dessen Position in Abhängigkeit von äußeren auf ihn wirkenden Kräften beeinflußt wird. Das Volumen des Strömungskanals kann beim Gegenstand der US 44 99 731 aber nicht gezielt eingestellt werden, so daß ein gezielter Wechsel zwischen Stoßaufladung und Stauaufladung des Turboladers nicht durchzuführen ist. Außerdem werden durch die Positionsveränderung des Stellkolbens die Strömungsverhältnisse im Strömungskanal verändert, was in bestimmten Betriebsbereichen der Brennkraftmaschine einen Leistungsabfall zur Folge haben kann.

Aus der Druckschrift DE 42 00 507 C2 ist eine veränderliche Blattfeder im Strömungskanal einer Strömungsmaschine bekannt, wobei die Position der Blattfeder.über eine Verstelleinrichtung beeinflußt werden kann. Die Positionsänderung der Blattfeder verändert das Volumen und die Gestalt des Strömungskanals, wodurch sich auch die Strömungsverhältnisse in unerwünschter Weise ändern können.

Zum Stand der Technik wird ergänzend auf die Druckschriften DE 197 27 140 C1 und EP 08 84 454 A1 verwiesen.

Der Erfindung liegt das Problem zugrunde, die Ausnutzung der Abgasenergie bei Brennkraftmaschinen mit einem Abgasturbolader, dessen Turbine über eine variabel einstellbare Turbinengeometrie verfügt, weiter zu verbessern.

Dieses Problem wird erfindungsgemäß mit den Merkmalen des Anspruches 1 gelöst.

Dem Stauraum mit variablem Volumen kommt eine Ausgleichs- bzw. Kompensationsfunktion zu, weil das für die Druckübertragung des Abgases zur Verfügung stehende Gesamtvolumen innerhalb des Turbinengehäuses an die aktuelle Situation bedarfsweise eingestellt werden kann. Dadurch ist es möglich, Bedingungen zu schaffen, die sowohl eine Stoßaufladung als auch eine Stauaufladung des Abgasturboladers jeweils mit hohem Wirkungsgrad erlauben, wodurch in einem breiten Einsatzspektrum eine verbesserte Energieausbeute gegeben ist.

Bei der Stoßaufladung, bei der Restenergie des in den Brennräumen enthaltenen Abgases impulsartig im Auslaßtakt bei Öffnung der Auslaßventile auf das Turbinenrad übertragen wird, ist es für eine wirkungsoptimierte Impulsübertragung zweckmäßig, das Gesamtvolumen in der Turbine, welches für die Übertragung des Impulses zur Verfügung steht, so klein wie möglich zu halten. Hierfür ist der Strömungskanal im Turbinengehäuse mit dem Stauraum veränderlichen Volumens verbunden, dessen Volumen reduziert wird, falls eine Stoßaufladung des Abgasturboladers gewünscht ist, so daß sich das Gesamtvolumen innerhalb des Turbinengehäuses ebenfalls reduziert und die Impulsübertragung auf das Turbinenrad begünstigt wird.

Bei der Stauaufladung dagegen werden die Abgase sämtlicher Zylinder aufgestaut und mit idealerweise etwa konstantem Druck der Turbine zugeführt, wofür ein vergrößertes Gesamtvolumen im Turbinengehäuse zweckmäßig ist. Die so erzielte Gleichbeaufschlagung führt zu einem besseren Wirkungsgradverhalten der Turbine.

Die Vergrößerung des Gesamtvolumens kann durch Zuschalten des Stauraumvolumens erreicht werden, indem lediglich die Verbindungsöffnung zwischen Strömungskanal und Stauraum freigegeben wird, im übrigen aber beide Volumina konstant gehalten werden. Gemäß einer anderen vorteilhaften Ausführung wird das Gesamtvolumen durch kontinuierliches Vergrößern des Stauraum-Volumens erreicht, wobei der Stauraum entweder permanent mit dem Strömungskanal kommuniziert oder zu- und abschaltbar mit dem Strömungskanal verbundenen ist.

Insbesondere bei niedrigen Massendurchsätzen durch die Turbine, bei denen nur ein geringer Abgasgegendruck aufgebaut werden kann, welcher für eine Stauaufladung eine nur unzureichende Energieausbeute ergeben würde, wird das Volumen des Stauraums verkleinert, so daß die Stoßaufladung (Nutzung des Abgasdruckimpulses) wirkungsvoll eingesetzt werden kann. Bei höheren Massendurchsätzen dagegen können bei vergrößertem Volumen über die Stauaufladung hohe Abgasgegendrücke mit entsprechend hohen Turbinenleistungen erzielt werden.

Gemäß einer vorteilhaften Ausgestaltung der Erfindung wird die situationsabhängige Einstellung des Volumens des Stauraums über ein Stellglied bewerkstelligt, welches einen Bestandteil der variablen Turbinengeometrie zur veränderlichen Einstellung des Turbinenrad-Eintrittsquerschnitts bildet. Diesem Stellglied kommt daher zusätzlich zur Einstellung der Querschnittsgeometrie auch die Funktion zu, das Volumen des Stauraums bzw. das Gesamtvolumen im Turbinengehäuse adaptiv einzustellen, so daß mit nur einem Bauteil zwei Funktionen ausgeübt werden können und hierdurch eine konstruktive Vereinfachung erzielt wird. Das Stellglied wird in bezug auf den Stauraum in der Weise angeordnet, daß zumindest eine Stellgliedposition existiert, in der der Stauraum mit dem Strömungskanal verbunden ist. Es kann hierbei sowohl angezeigt sein, nur eine einzige Position des Stellglieds vorzusehen, in der der Stauraum mit dem Strömungskanal kommuniziert und im übrigen vom Strömungskanal isoliert ist, als auch eine kontinuierliche bzw. quasikontinuierliche Einstellung des Stauraumvolumens in Abhängigkeit der Stellgliedposition zu ermöglichen.

Bevorzugt werden eine Wandung oder mehrere Wandungen des Stauraums von der variablen Turbinengeometrie bzw. dem Stellglied der Turbinengeometrie begrenzt, so daß eine Verstellung der Turbinengeometrie automatisch eine Vergrößerung oder Verkleinerung des Stauraumvolumens zur Folge hat.

Vorteilhaft ist bei einer Turbine, die mit einem radialen und einem halbaxialen Turbinenrad-Eintrittsquerschnitt versehen ist, der Stauraum benachbart zum radialen Turbinenrad-Eintrittsquerschnitt, insbesondere zwischen dem radialen und dem halbaxialen Turbinenrad-Eintrittsquerschnitt, angeordnet, wodurch eine platzsparende Ausbildung realisiert werden kann. Das vorzugsweise als axial verschiebliche Ringhülse ausgebildete Stellglied ist axial zwischen Sperr- und Freigabestellung verstellbar, wobei in Sperrstellung das Gesamtvolumen von Stauraum und Strömungskanal ein Minimum und in Freigabestellung ein Maximum einnimmt. In Sperrstellung ist vorteilhaft der radiale Turbinenrad-Eintrittsquerschnitt abgesperrt, so daß das der Turbine zugeführte Abgas das Turbinenrad nur über den halbaxialen Turbinenrad-Eintrittsquerschnitt beaufschlagen kann. In Freigabestellung dagegen wird das Turbinenrad sowohl über den halbaxialen als auch über den radialen Turbinenrad-Eintrittsquerschnitt mit Abgas versorgt. Die Sperrstellung, die mit einer Minimierung des Stauraums einhergeht, ist im befeuerten Betrieb der Brennkraftmaschine zweckmäßig für die Stoßaufladung, die Freigabestellung dagegen für die Stauaufladung vorgesehen.

Es sind bevorzugt mehrere, getrennt ausgebildete Strömungskanäle im Turbinengehäuse ausgebildet, die in den halbaxialen Turbinenrad-Eintrittsquerschnitt münden und das Turbinenrad über den Umfang gesehen segmentweise beaufschlagen, wodurch eine Abgasvermischung zwischen einzelnen Strömungskanälen verhindert wird. In Freigabestellung der variablen Turbinengeometrie kommunizieren die Strömungskanäle mit dem Stauraum, über den Abgas über den radialen Turbinenrad-Eintrittsquerschnitt dem Turbinenrad zuführbar ist. In Sperrstellung dagegen ist das Volumen des Stauraums reduziert und der radiale Turbinenrad-Eintrittsquerschnitt blockiert oder auf ein Minimum beschränkt. Die Strömungskanäle sind über eine Trennwand, in die eine Verbindungsöffnung eingebracht ist, vom Stauraum separiert, wobei der Querschnitt der Verbindungsöffnungen vom Stellglied der Turbinengeometrie vergrößert oder verkleinert werden kann.

Weitere Vorteile und zweckmäßige Ausführungsformen sind den weiteren Ansprüchen, der Figurenbeschreibung und den Zeichnungen zu entnehmen. Es zeigen:
- Fig. 1: eine schematische Darstellung einer aufgeladenen Brennkraftmaschine mit erfindungsgemäßer Abgasturbine in einer ersten Ausführung,
- Fig. 2: die Abgasturbine aus Fig. 1 in vergrößerter Darstellung,
- Fig. 3: eine Ansicht gemäß Schnittlinie III-III aus Fig. 2,
- Fig. 4: einen Schnitt durch eine Abgasturbine mit variabler Turbinengeometrie in einer weiteren Ausführung,
- Fig. 4a: eine partielle Ausschnittvergrößerung aus Fig. 4.

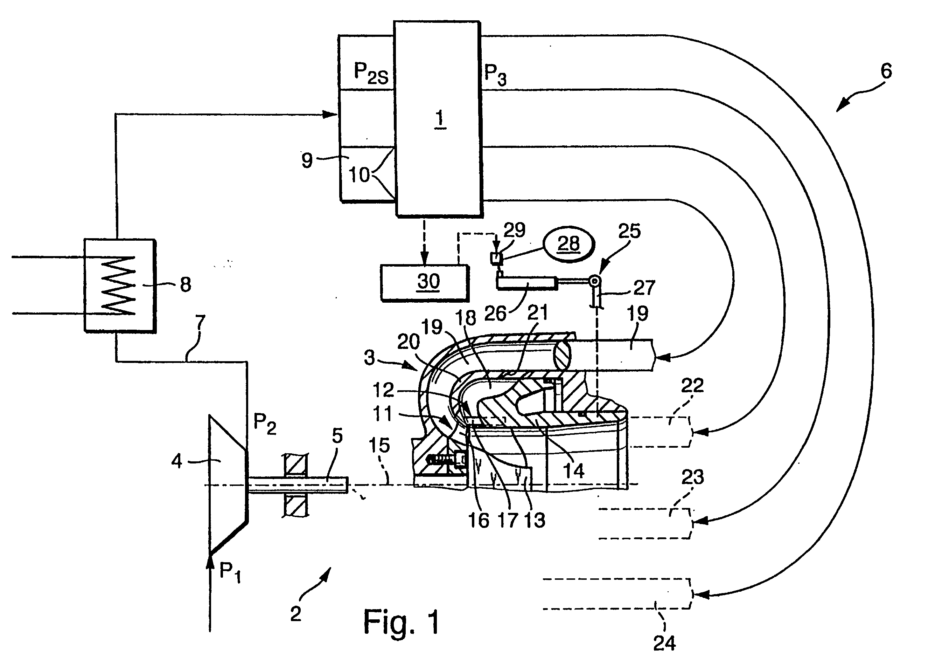

Bei den in den Fig. 1 bis 4a dargestellten Ausführungsbeispielen sind gleiche Bauteile mit gleichen Bezugszeichen versehen.

Die in Fig. 1 schematisch dargestellte Brennkraftmaschine 1, beispielsweise die Brennkraftmaschine eines Personenkraftwagens oder eines Nutzfahrzeugs, weist einen Abgasturbolader 2 mit einer Turbine 3 im Abgasstrang 6 und einen Verdichter 4 im Ansaugtrakt 7 auf. Die Turbine 3 ist mit einer variabel einstellbaren Turbinengeometrie zur veränderlichen Einstellung des wirksamen Turbinenquerschnitts ausgestattet. Die Turbine 3 wird von den unter dem Abgasgegendruck p₃ stehenden Abgasen im Abgasstrang 6 zwischen dem Zylinderauslaß der Brennkraftmaschine und dem Turbineneinlaß angetrieben. Stromab der Turbine 3 wird das entspannte Abgas über einen Katalysator in die Atmosphäre abgelassen.

Die Turbine 3 treibt über eine Welle 5 den Verdichter 4 an, der die mit Atmosphärendruck p₁ angesaugte Verbrennungsluft auf einen erhöhten Druck p₂ verdichtet. Die im Verdichter 4 komprimierte Verbrennungsluft wird in einem Ladeluftkühler 8 stromab des Verdichters 4 gekühlt und anschließend mit dem Ladedruck p_{2S} dem Saugrohr 9 der Brennkraftmaschine 1 zur Verteilung auf die Zylindereinlässe 10 zugeführt. Der erhöhte Ladedruck p_{2S} führt zu einer Steigerung der Motorantriebsleistung.

Die Turbine 3 weist einen halbaxialen Turbinenrad-Eintrittsquerschnitt 11 am Ende eines Strömungskanals 19 sowie einen radialen Turbinenrad-Eintrittsquerschnitt 12 auf; über die Eintrittsquerschnitte 11, 12 wird das in die Turbine 3 einströmende Abgas dem Turbinenrad 13 zugeführt. Im Bereich des halbaxialen Turbinenrad-Eintrittsquerschnitt 11 befindet sich ein feststehendes, ringförmiges Leitgitter 16, dessen Beschaufelung auf kleinere bis mittlere Massendurchsätze optimiert ist. Im Bereich des radialen Turbinenrad-Eintrittsquerschnitt 12 ist ein ebenfalls ringförmig ausgebildetes Leitgitter 17 mit Leitschaufeln angeordnet.

Die variable Turbinengeometrie umfaßt ein Stellglied 14, welches im Ausführungsbeispiel als axial verschiebliche Ringhülse ausgebildet ist und koaxial zur Turbinenlängsachse 15 zwischen einer Sperrstellung mit reduziertem Turbinenrad-Eintrittsquerschnitt und einer Freigabestellung mit erweitertem Turbinenrad-Eintrittsquerschnitt verstellbar ist. Das Stellglied 14 beeinflußt ausschließlich den radialen Turbinenrad-Eintrittsquerschnitt 12, der in Sperrstellung abgesperrt oder auf ein Minimum reduziert ist und in Freigabestellung ein Maximum einnimmt.

Die Position des Stellglied 14 wird mit Hilfe einer pneumatischen Stellvorrichtung 25 eingestellt, die zwei Stellhebel 26, 27 umfaßt, welche mittels einer Druckluftquelle 28 betätigt werden. Zwischen der Druckluftquelle 28 und der Stellvorrichtung 25 ist ein Pneumatikventil 29 zwischengeschaltet, das über einen Regler 30 in Abhängigkeit des Betriebszustands der Brennkraftmaschine 1 geöffnet und geschlossen werden kann.

Anstelle einer pneumatischen Betätigung kommt auch eine elektrische oder hydraulische Betätigung in Frage.

Gemäß einer weiteren Ausführung kann die variable Turbinengeometrie anstelle eines Axialschiebers auch durch drehbare Leitschaufeln im Leitgitter realisiert sein. Die Querschnittseinstellung wird in diesem Fall durch Drehung der Schaufeln bewerkstelligt.

Darüberhinaus kann es zweckmäßig sein, das Stellglied 14 in Freigabestellung so weit zu verschieben, daß axial keine Überdeckung mehr zwischen Stellglied 14 und Turbinenrad 13 gegeben ist. In dieser Stellung des Stellglieds 14 wird ein Abgas-Bypass zur Umgehung des Turbinenrads 13 ermöglicht. Konstruktiv wird dies durch eine axial kurze Ausgestaltung des Turbinenrads 13 unterstützt.

Im Turbinengehäuse der Turbine 3 ist ein das Turbinenrad ringförmig umschließender Stauraum 18 ausgebildet, der radial zwischen dem Strömungskanal 19 und dem radialen Turbinenrad-Eintrittsquerschnitt 12 angeordnet ist. Der Stauraum 18 ist über eine Trennwand 20 vom Strömungskanal 19 separiert; die Trennwand 20 weist eine Verbindungsöffnung 21 auf, über die Abgas aus dem Strömungskanal 19 in den Stauraum 18 einströmen kann. Auf der radial innenliegenden Seite des Stauraums 18 befindet sich der radiale Turbinenrad-Eintrittsquerschnitt 12.

Eine Wandung des Stauraums 18 wird von dem radial erweiterten Stellglied 14 der variablen Turbinengeometrie gebildet, so daß das Volumen des Stauraums 18 in Abhängigkeit der Position des Stellglieds 14 veränderlich einstellbar ist. In Freigabestellung des Stellglieds 14 nimmt das Volumen des Stauraums 18 ein Maximum ein; sowohl der radiale Turbinenrad-Eintrittsquerschnitt 12 als auch die Verbindungsöffnung 21 sind in Freigabestellung geöffnet. In Sperrstellung beträgt das Volumen des Stauraums 18 Null bzw. nimmt ein Minimum ein; der radiale Turbinenrad-Eintrittsquerschnitt 12 und die Verbindungsöffnung 21 sind vom Stellglied 14 verschlossen.

Es kann zweckmäßig sein, das Volumen des Stauraums unabhängig von der Position des Stellglieds der variablen Turbinengeometrie konstant zu halten und lediglich den Querschnitt der Verbindungsöffnung zwischen dem Strömungskanal und dem Stauraum in Abhängigkeit der Position des Stellglieds zu beeinflussen.

Es sind insgesamt vier symmetrisch über den Umfang der Turbine 3 verteilte Strömungskanäle 19, 22, 23, 24 angeordnet, die unmittelbar über die Zylinderauslässe einzelner Zylinder oder Zylindergruppen der Brennkraftmaschine 1 mit Abgas versorgt werden und jeweils einen halbaxialen, segmentförmigen Turbinenrad-Eintrittsquerschnitt mit Abgas beaufschlagen. Die drei weiteren Strömungskanäle 22 bis 24 sind in entsprechender Weise wie der Strömungskanal 19 aufgebaut und kommunizieren in Freigabestellung des Stellglieds 14 über weitere Verbindungsöffnungen mit dem Stauraum 18, wohingegen in Sperrstellung sämtliche Strömungskanäle vom Stauraum 18 abgesperrt sind und nur das dem jeweiligen Strömungskanal zugeordnete Segment des halbaxialen Turbinenrad-Eintrittsquerschnitts 11 beaufschlagt wird.

Die variable Turbinengeometrie der Turbine 3 kann zur Wirkungsgradsteigerung in der befeuerten Antriebsbetriebsweise herangezogen werden. Bei niedrigen Abgas-Massendurchsätzen - bei kleiner Last und/oder kleiner Drehzahl - wird eine Stoßaufladung zum Antrieb der Turbine 3 eingesetzt, wobei das Stellglied 14 der variablen Turbinengeometrie in die Sperrstellung überführt wird, in der der radiale Turbinenrad-Eintrittsquerschnitt 12 und auch der Querschnitt der Verbindungsöffnung 21 zwischen Strömungskanal 19 bzw. den weiteren Strömungskanälen 22 bis 24 und Stauraum 18 reduziert oder abgesperrt ist. Das Abgas wird hauptsächlich oder ausschließlich über den halbaxialen Turbinenrad-Eintrittsquerschnitt 11 dem Turbinenrad 13 zugeführt, zugleich ist das gesamte für die Druckausbreitung in der Turbine 3 zur Verfügung stehende Volumen reduziert, wodurch die Druckausbreitung bei der Stoßaufladung begünstigt wird.

Bei hohen Abgas-Massendurchsätzen - hohe Last, hohe Drehzahl - kommt bevorzugt eine Stauaufladung zur Anwendung, indem das Stellglied 14 in seine Freigabestellung überführt wird, in der die Durchtrittsöffnung 21 und der radiale Turbinenrad-Eintrittsquerschnitt 12 geöffnet ist und das Volumen des Stauraums 18 vergrößert ist, so daß durch die Strömungskanäle 19, 22, 23, 24 einströmendes Abgas sich auch im ringförmigen Stauraum 18 ausbreiten kann.

Die Anzahl an Strömungskanälen kann mit der Anzahl der Zylinder und in Abhängigkeit der Bauart der Brennkraftmaschine variieren.

Der Abgasturbolader 2 kann auch im Motorbremsbetrieb zur Erzeugung von Motorbremsleistung eingesetzt werden. Das Stellglied 14 der Turbine 3 wird hierfür in die Sperrstellung überführt, woraufhin sich ein erhöhter Abgasgegendruck p₃ aufbaut und das Abgas mit erhöhter Geschwindigkeit durch den reduzierten Eintrittsquerschnitt der Turbine strömt und auf das den Verdichter 4 antreibende Turbinenrad 13 trifft. Im Ansaugtrakt 7 wird ein hoher Überdruck p₂ aufgebaut, zugleich werden Bremsventile am Zylinderauslaß der Brennkraftmaschine 1 geöffnet, durch die die im Zylinder verdichtete Luft gegen den aufgestauten Abgasgegendruck p₃ in den Abgasstrang 6 abgeblasen wird.

Die Bremsleistung kann durch die Stellung der variablen Turbinengeometrie und der daraus resultierenden Einstellung des Turbinenrad-Eintrittsquerschnitts beeinflußt werden.

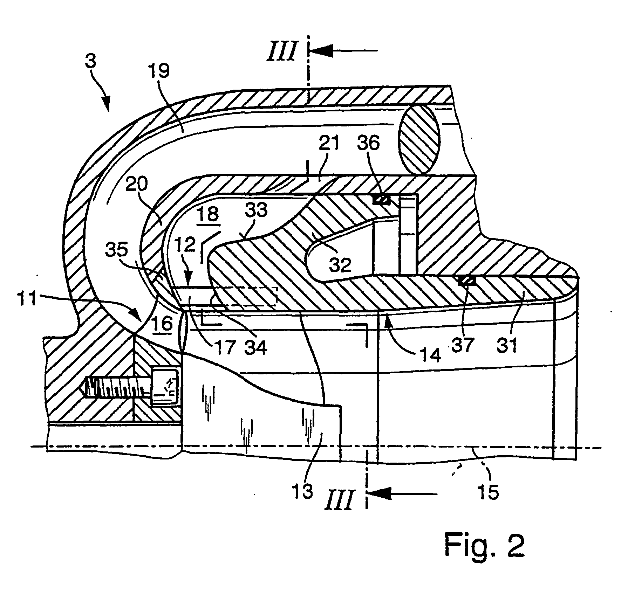

Der Ausschnittvergrößerung nach Fig. 2 ist zu entnehmen, daß das Stellglied 14 der variablen Turbinengeometrie stromab des Turbinenrads 13 einen kegelringförmigen Abschnitt 31 bildet, dessen Durchmesser mit zunehmendem axialen Abstand zum Turbinenrad 13 größer wird. Auf der dem Stauraum 18 zugewandten Seite besitzt das Stellglied 14 einen radial erweiterten Abschnitt 32, der eine Wandung 33 des Stauraums bildet. Die Wandung 33 kann gegebenenfalls an die gegenüberliegende Kontur der Trennwand 20 angepaßt sein, so daß in Sperrstellung des Stellglieds 14 die Wandung 33 unmittelbar an der gegenüberliegenden Wandseite des Stauraums 18 anliegt und das Volumen des Stauraums 18 auf Null reduziert wird. Durch axiale Verstellung des Stellglieds 14 und der Wandung 33 wird das Volumen des Stauraums 18 vergrößert bzw. verkleinert.

Die radial außenliegende Mantelfläche des radial erweiterten Abschnitts 32 verschließt in Sperrstellung des Stellglieds 14 die Verbindungsöffnung 21 zwischen Stauraum 18 und Strömungskanal 19 bzw. den weiteren, in Fig. 2 nicht eingezeichneten Strömungskanälen. Der Innenmantel des Stellglieds 14 verschließt in Sperrstellung den radialen Turbinenrad-Eintrittsquerschnitt 12. In Freigabestellung sind zweckmäßig sowohl die Verbindungsöffnung 21 als auch der Turbinenrad-Eintrittsquerschnitt 12 vollständig geöffnet.

An der Stirnseite des Stellglieds 14 ist im Bereich des Turbinenrad-Eintrittsquerschnitts 12 eine Leitgitteraufnahme 34 eingebracht, in die das an einem ringförmigen Trennelement 35 befestigte radiale Leitgitter 17 in Sperrstellung des Stellglieds vollständig einfahrbar ist, um einen strömungsdichten Abschluß des radialen Turbinenrad-Eintrittsquerschnitt 12 zu ermöglichen. Das Trennelement 35 ist an der Stirnseite der gehäuseseitigen Trennwand 20 gehalten und dient zugleich zur Befestigung des halbaxialen Leitgitters 16 im Bereich des halbaxialen Turbinenrad-Eintrittsquerschnitt 11.

Es kann auch zweckmäßig sein, das radiale Leitgitter 17 an der Stirnseite des Stellglieds 14 zu befestigen und eine Aufnahme am Trennelement 35 vorzusehen, in die das Leitgitter 17 beim Überführen in Sperrstellung eingefahren wird.

Das Stellglied 14 ist über zwei Dichtringe 36, 37 gegenüber dem Turbinengehäuse abgedichtet.

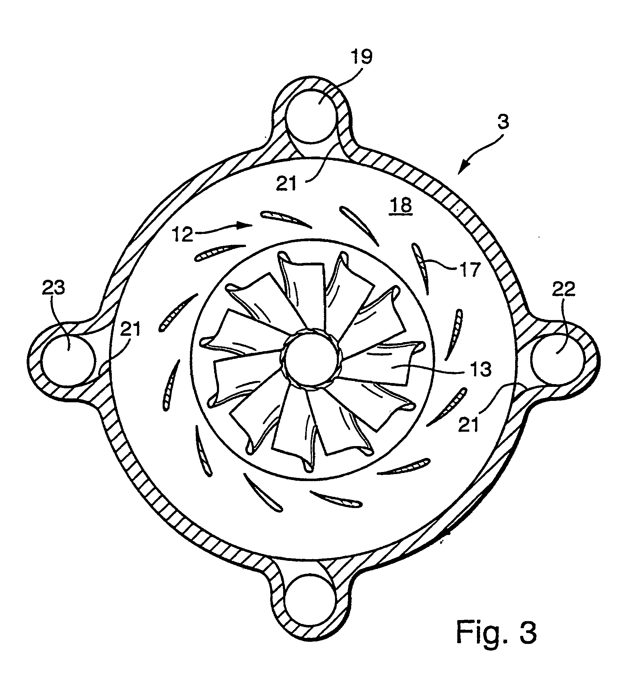

Der Schnittdarstellung nach Fig. 3 ist zu entnehmen, daß die Verbindungsöffnungen 21 die Form strömungsgünstig konturierter Steuerschlitze aufweisen, so daß bei unversperrten Verbindungsöffnungen 21 das aus den Strömungskanälen 19, 22, 23 in den den Stauraum 18 einströmende Abgas einen Drall erfährt, der das Abgas im Stauraum 18 auf ein Ringbahn lenkt. Hierdurch wird die Abgasverteilung im ringförmigen Stauraum 18 verbessert.

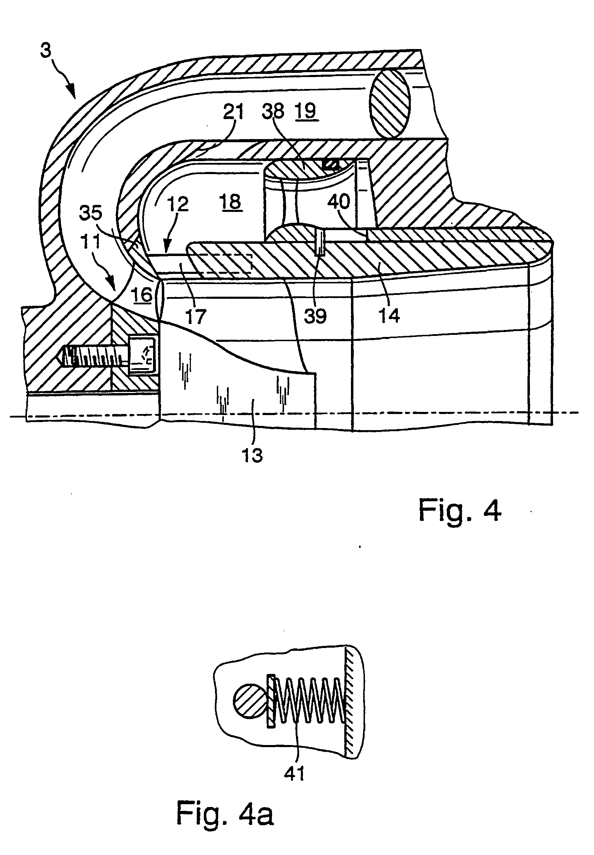

Gemäß dem Ausführungsbeispiel nach Fig. 4 ist die Verstellbewegung des Stellglieds 14 zwischen Sperr- und Freigabestellung zum Sperren und Freigeben des radialen Turbinenrad-Eintrittsquerschnitts 12 zumindest teilweise von dem Öffnen und dem Schließen der Verbindungsöffnung 21 zwischen Strömungskanal 19 und Stauraum 18 entkoppelt. Die Verbindungsöffnung 21 ist über einen axial verschiebbaren Steuerkörper 38 zu öffnen und zu verschließen, der ringförmig ausgebildet und auf der radial außenliegenden Mantelfläche des Stellglieds 14 angeordnet und relativ zum Stellglied 14 verschiebbar ist. Der Steuerkörper 38 ist über einen Mitnehmeranschlag 39, der am Stellglied 14 befestigt ist und in eine Mitnehmerausnehmung 40 in der Wandung des Steuerkörpers 38 einragt, mit dem Stellglied 14 verbunden. Der Mitnehmeranschlag 39 in der Mitnehmerausnehmung 40 bewirkt, daß bei einer axialen Verschiebung des Steuerkörpers 38 von einer die Verbindungsöffnung 21 verschließenden in eine die Verbindungsöffnung 21 öffnenden Stellung das Stellglied 14 zunächst noch in seiner Sperrstellung verharrt; dies kommt einem Übergang von Stoß- auf Stauaufladung unter Beibehaltung der ausschließlich halbaxialen Turbinenrad-Anströmung gleich. Erst bei einem weiteren Verschieben des Steuerkörpers 38 in Öffnungsrichtung kommt der Mitnehmeranschlag 39 in Berührung mit einer Seitenwand der Mitnehmerausnehmung 40, so daß im weiteren Verlauf auch das Stellglied 14 aus der Sperrstellung in die Freigabestellung überführt wird und der radial Turbinenrad-Eintrittsquerschnitt 12 freikommt.

In der Ausschnittvergrößerung gemäß Fig. 4a ist eine Rückholfeder 41 eingezeichnet, die das Stellglied in Sperrstellung beaufschlagt.

## Patentansprüche

1. Abgasturbolader für eine Brennkraftmaschine, mit einem Verdichter (4) im Ansaugtrakt (7) und einer im Abgasstrang (6) angeordneten Turbine (3), die ein Turbinenrad (13) in einem Turbinengehäuse und wenigstens einen Strömungskanal (19) für die Zufuhr von Abgas aufweist und die mit einer variablen Turbinengeometrie zur veränderlichen Einstellung des wirksamen Turbinenrad-Eintrittsquerschnitts (12) ausgestattet ist, wobei die variable Turbinengeometrie zwischen einer den Turbinenrad-Eintrittsquerschnitt (12) verringernden Sperrstellung und einer den Turbinenrad-Eintrittsquerschnitt (12) vergrößernden Freigabestellung verstellbar ist,
**dadurch gekennzeichnet**
**daß** im Turbinengehäuse ein Stauraum (18) vor einem Leitgitter (17) vorgesehen ist, der über eine Trennwand (20) gegenüber dem Strömungskanal (19) separiert ist, wobei in die Trennwand (20) eine Verbindungsöffnung (21) für die Kommunikation zwischen Strömungskanal (19) und Stauraum (18) eingebracht sind, und daß das Gesamtvolumen von Strömungskanal (19) und Stauraum (18) über ein Verstellelement in Abhängigkeit des Betriebszustands der Brennkraftmaschine durch Einstellung des Querschnitts der Verbindungsöffnung (21) und/oder durch Einstellung des Volumens des Stauraums (18) veränderlich einstellbar ist.

2. Abgasturbolader nach Anspruch 1,
**dadurch gekennzeichnet,**
**daß** die variable Turbinengeometrie ein einstellbares Stellglied (14) umfaßt und daß der Stauraum (18) in zumindest einer Position des Stellglieds (14) mit dem Strömungskanal (19) kommuniziert.

3. Abgasturbolader nach Anspruch 2,
**dadurch gekennzeichnet,**
**daß** das Stellglied (14) der variablen Turbinengeometrie das das Volumen des Stauraums (18) einstellende Verstellelement ist.

4. Abgasturbolader nach Anspruch 2 oder 3,
**dadurch gekennzeichnet,**
**daß** zumindest eine Wandung (33) des Stauraums (18) von dem Stellglied (14) der variablen Turbinengeometrie gebildet ist.

5. Abgasturbolader nach einem der Ansprüche 1 bis 4,
**dadurch gekennzeichnet,**
**daß** der Stauraum (18) bei niedrigen Massendurchsätzen durch die Turbine (3) ein kleineres mit dem Strömungskanal (19) kommunizierendes Volumen aufweist als bei höheren Massendurchsätzen.

6. Abgasturbolader nach einem der Ansprüche 1 bis 5,
**dadurch gekennzeichnet,**
**daß** in Sperrstellung der variablen Turbinengeometrie das mit dem Strömungskanal (19) kommunizierende Volumen des Stauraums (18) geringer ist als in der Freigabestellung.

7. Abgasturbolader nach einem der Ansprüche 1 bis 6,
**dadurch gekennzeichnet,**
**daß** die Turbine (3) einen radialen Turbinenrad-Eintrittsquerschnitt (12) und einen halbaxialen Turbinenrad-Eintrittsquerschnitt (11) aufweist.

8. Abgasturbolader nach Anspruch 7,
**dadurch gekennzeichnet,**
**daß** der Stauraum (18) benachbart zum radialen Turbinenrad-Eintrittsquerschnitt (12) angeordnet ist.

9. Abgasturbolader nach Anspruch 7 oder 8,
**dadurch gekennzeichnet,**
**daß** das Stellglied (14) der variablen Turbinengeometrie als axial verschiebliche Ringhülse ausgebildet ist.

10. Abgasturbolader nach einem der Ansprüche 1 bis 9,
**dadurch gekennzeichnet,**
**daß** der Stauraum (18) das Turbinenrad (3) ringförmig umschließt.

11. Abgasturbolader nach Anspruch 10,
**dadurch gekennzeichnet,**
**daß** der Strömungskanal (19) auf der radial außenliegenden Seite des stauraums (18) im Turbinengehäuse angeordnet ist.

12. Abgasturbolader nach einem der Ansprüche 1 bis 11,
**dadurch gekennzeichnet,**
**daß** eine Mehrzahl getrennt ausgebildeter Strömungskanäle (19, 22, 23, 24) vorgesehen ist und der Stauraum (18) mit jedem Strömungskanal (19, 22, 23, 24) kommuniziert.

13. Abgasturbolader nach Anspruch 7 und 12,
**dadurch gekennzeichnet,**
**daß** sämtliche Strömungskanäle (19, 22, 23, 24) in den halbaxialen Turbinenrad-Eintrittsquerschnitt (11) münden.

14. Abgasturbolader nach einem der Ansprüche 1 bis 13,
**dadurch gekennzeichnet,**
**daß** das radiale Leitgitter (17) an der Stirnseite des Stellglieds (14) befestigt ist und eine Aufnahme am Trennelement (35) aufweist, in die das Leitgitter (17) beim Überführen in Sperrstellung einfahrbar ist.

15. Abgasturbolader nach einem der Ansprüche 1 bis 14,
**dadurch gekennzeichnet,**
**daß** das Leitgitter (17) fest am Stellglied (14) angeordnet und die Leitgitteraufnahme (34) fest am Trennelement (35) angeordnet ist.

## Claims

1. Exhaust gas turbocharger for an internal combustion engine, with a compressor (4) in the intake duct (7) and a turbine (3) arranged in the exhaust line (6), which comprises a turbine rotor (13) in a turbine housing and at least one flow channel (19) for the admission of exhaust gas, and which is equipped with variable turbine geometry for the variable adjustment of the effective turbine rotor inlet cross-section (12), such that the variable turbine geometry can be adjusted between a blocking position that reduces the turbine rotor inlet cross-section (12) and an unblocking position that increases the turbine rotor inlet cross-section (12),
**characterised in that**
in the turbine housing a dynamic pressure space (18) ahead of a guide baffle (17) is provided, which is separated from the flow channel (19) by a partition wall (20), and in the partition wall (20) a connection aperture (21) is formed for communication between the flow channel (19) and the dynamic pressure space (18), and the total volume of the flow channel (19) together with the dynamic pressure space (18) can be variably adjusted by means of a control element as a function of the operating condition of the internal combustion engine by adjusting the cross-section of the connection aperture (21) and/or by adjusting the volume of the dynamic pressure space (18).

2. Exhaust gas turbocharger according to Claim 1,
**characterised in that**
the variable turbine geometry comprises an adjustable control element (14) and in at least one position of the said control element (14) the dynamic pressure space (18) communicates with the flow channel (19).

3. Exhaust gas turbocharger according to Claim 2,
**characterised in that**
the control element (14) of the variable turbine geometry is the element by means of which the volume of the dynamic pressure space (18), is adjusted.

4. Exhaust gas turbocharger according to Claims 2 or 3,
**characterised in that**
at least one wall (33) of the dynamic pressure space (18) is formed by the control element (14) of the variable turbine geometry.

5. Exhaust gas turbocharger according to any of Claims 1 to 4,
**characterised in that**
when the mass flow through the turbine (3) is low, the volume of the dynamic pressure space (18) that communicates with the flow channel (19) is smaller than when the mass flow is larger.

6. Exhaust gas turbocharger according to any of Claims 1 to 5,
**characterised in that**
in the blocking position of the variable turbine geometry, the volume of the dynamic pressure space (18) that communicates with the flow channel (19) is smaller than in the unblocking position.

7. Exhaust gas turbocharger according to and of Claims 1 to 6,
**characterised in that**
the turbine (3) has a radial turbine rotor inlet cross-section (12) and a semi-axial turbine rotor inlet cross-section (11).

8. Exhaust gas turbocharger according to Claim 7,
**characterised in that**
the dynamic pressure space (18) is arranged close to the radial turbine rotor inlet cross-section (12).

9. Exhaust gas turbocharger according to Claims 7 or 8,
**characterised in that**
the control element (14) of the variable turbine geometry is formed as an axially movable annular sleeve.

10. Exhaust gas turbocharger according to any of Claims 1 to 9,
**characterised in that**
the dynamic pressure space (18) surrounds the turbine rotor (3) in the shape of a ring.

11. Exhaust gas turbocharger according to Claim 10,
**characterised in that**
the flow channel (19) is arranged on the radially outer side of the dynamic pressure space (18) in the turbine housing.

12. Exhaust gas turbocharger according to any of Claims 1 to 11,
**characterised in that**
a plurality of separately formed flow channels (19, 22, 23, 24) are provided and the dynamic pressure space (18) communicates with each flow channel (19, 22, 23, 24).

13. Exhaust gas turbocharger according to Claims 7 and 12,
**characterised in that**
all the flow channels (19, 22, 23, 24) open into the semi-axial turbine rotor inlet cross-section (12).

14. Exhaust gas turbocharger according to any of Claims 1 to 13,
**characterised in that**
the radial guide baffle (17) is attached at the front end of the control element (14) and a mounting is positioned on the partition element (35), which the guide baffle (17) can enter when it moves to the blocking position.

15. Exhaust gas turbocharger according to any of Claims 1 to 14,
**characterised in that**
the guide baffle (17) is arranged fixed on the control element (14) and the guide baffle mounting (34) is arranged fixed on the partition element (35).

## Revendications

1. Turbocompresseur à gaz d'échappement pour un moteur à combustion interne, comportant un compresseur (4) dans le circuit d'aspiration (7) et une turbine (3) agencée dans le circuit des gaz d'échappement (6), qui comprend un rotor de turbine (13) dans un boîtier de turbine et au moins un canal d'écoulement (19) pour l'alimentation en gaz d'échappement et qui est munie d'une géométrie variable pour le réglage variable de la section transversale d'entrée (12) efficace du rotor de turbine, la géométrie variable de la turbine pouvant être variée entre une position d'obturation réduisant la section transversale d'entrée (12) et une position de libération augmentant la section transversale d'entrée (12),
**caractérisé en ce que**
une chambre d'accumulation (18) est prévue en avant d'une grille directrice (17) dans le boîtier de turbine, chambre qui est séparée du canal d'écoulement (19) par une paroi de séparation (20), une ouverture (21) pour la communication entre le canal d'écoulement (19) et la chambre d'accumulation (18) étant ménagée dans la paroi de séparation (20), et **en ce que** le volume total du canal d'écoulement (19) et de la chambre d'accumulation (18) est réglable de façon variable via un élément de déplacement en fonction de l'état de fonctionnement du moteur à combustion interne, par réglage de la section transversale de l'ouverture de communication (21) et/ou par réglage du volume de la chambre d'accumulation (18).

2. Turbocompresseur à gaz d'échappement selon la revendication 1, **caractérisé en ce que** la géométrie variable de la turbine comprend un organe de positionnement réglable (14) et **en ce que** la chambre d'accumulation (18) communique avec le canal d'écoulement (19) dans au moins une position de l'organe de positionnement (14).

3. Turbocompresseur à gaz d'échappement selon la revendication 2, **caractérisé en ce que** l'organe de positionnement (14) de la géométrie variable de la turbine est l'élément de déplacement réglant le volume de la chambre d'accumulation (18).

4. Turbocompresseur à gaz d'échappement selon l'une ou l'autre des revendications 2 et 3, **caractérisé en ce qu'**au moins une paroi (33) de la chambre d'accumulation (18) est formée par l'organe de positionnement (14) de la géométrie variable de la turbine.

5. Turbocompresseur à gaz d'échappement selon l'une des revendications 1 à 4, **caractérisé en ce que** pour ses débits massiques faibles à travers la turbine (3), la chambre d'accumulation (18) présente un volume de communication avec le canal d'écoulement (19) plus faible que pour des débits massiques plus importants.

6. Turbocompresseur à gaz d'échappement selon l'une des revendications 1 à 5, **caractérisé en ce que** dans la position d'obturation de la géométrie variable de la turbine, le volume de la chambre d'accumulation (18), qui communique avec le canal d'écoulement (19) est inférieur à celui dans la position de libération.

7. Turbocompresseur à gaz d'échappement selon l'une des revendications 1 à 6, **caractérisé en ce que** la turbine (3) présente une section transversale d'entrée radiale (12) du rotor de turbine et une section transversale d'entrée semi-axiale (11) du rotor de turbine.

8. Turbocompresseur à gaz d'échappement selon la revendication 7, **caractérisé en ce que** la chambre d'accumulation (18) est agencée au voisinage de la section transversale d'entrée radiale (12) du rotor de turbine.

9. Turbocompresseur à gaz d'échappement selon l'une ou l'autre des revendications 7 et 8, **caractérisé en ce que** l'organe de positionnement (14) de la géométrie variable de la turbine est réalisé sous la forme d'une douille annulaire axialement mobile.

10. Turbocompresseur à gaz d'échappement selon l'une des revendications 1 à 9, **caractérisé en ce que** la chambre d'accumulation (18) entoure en forme annulaire le rotor de turbine (13).

11. Turbocompresseur à gaz d'échappement selon la revendication 10, **caractérisé en ce que** le canal d'écoulement (19) est agencé sur le côté radialement extérieur de la chambre d'accumulation (18) dans le boîtier de turbine.

12. Turbocompresseur à gaz d'échappement selon l'une des revendications 1 à 11, **caractérisé en ce qu'**il est prévu une pluralité de canaux d'écoulement (19, 22, 23, 24) réalisés séparément, et **en ce que** la chambre d'accumulation (18) communique avec chaque canal d'écoulement (19, 22, 23, 24).

13. Turbocompresseur à gaz d'échappement selon les revendications 7 et 12, **caractérisé en ce que** tous les canaux d'écoulement (19, 22, 23, 24) débouchent dans la section transversale d'entrée semi-axiale (11) du rotor de turbine.

14. Turbocompresseur à gaz d'échappement selon l'une des revendications 1 à 13, **caractérisé en ce que** la grille directrice radiale (17) est fixée sur le côté frontal de l'organe de positionnement (14) et présente un logement sur l'élément de séparation (35), dans lequel peut venir s'introduire la grille directrice (17) lors du transfert vers la position d'obturation.

15. Turbocompresseur à gaz d'échappement selon l'une des revendications 1 à 14, **caractérisé en ce que** la grille directrice (17) est agencée solidairement sur l'organe de positionnement (14) et le logement (34) de la grille directrice est ménagé solidairement sur l'élément de séparation (35).
